# EUROPEAN PATENT APPLICATION

(11) **EP 4 614 636 A1**
(43) Date of publication of application: **10.09.2025**
(21) Application number: 24162148.1
(22) Date of filing: 07.03.2024
(51) Int. Cl.: H01M 10/04, H01M 10/42, H01M 10/613, H01M 10/625, H01M 10/647, H01M 10/6556, H01M 10/6557, H01M 50/209, H01M 50/249, H01M 50/271, H01M 50/291

(54) **A BATTERY PACK, A VEHICLE AND A METHOD FOR MANUFACTURING A BATTERY PACK**

(71) Applicant: VOLVO TRUCK CORPORATION, 405 08 Göteborg (SE)
(72) Inventor: Rout, Dhirendra, 422 54 Göteborg (SE); Irannezhad, Mike, 411 20 Göteborg (SE); Jonsson, Kasper, 417 57 Göteborg (SE)
(74) Representative: Kransell & Wennborg KB

(57) **Abstract**

The disclosure relates to a battery pack (1) comprising:
- a plurality of prismatic battery cells (2),
- a bottom support member (3) having an extension along a longitudinal direction (L) and an extension along a width direction (W) such that it forms a support surface (31) facing upwardly along a height direction (H),
- a cooling plate member (4) having an extension along the longitudinal direction (L) and an extension along the height direction (H),
- a plurality of transverse wall members (51, 52),
wherein the plurality of prismatic battery cells (2) are stacked in separate groups, each separate group comprising a set of prismatic battery cells stacked next to each other with top surfaces (21) facing upwardly in the height direction (H). A vehicle and a method are also disclosed.

## Description

### TECHNICAL FIELD

The disclosure relates generally to energy storage systems. In particular aspects, the disclosure relates to a battery pack, a vehicle and a method for manufacturing a battery pack. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery cells may be prismatic battery cells. The battery pack may be installed in an electric or hybrid vehicle and used for driving one or more electric motors. The one or more electric motors may also be used as generators and may for example recharge the cells of the battery pack during regenerative braking of the vehicle.

Due to the electrification trend, such as for vehicles, there is an ongoing strive to develop improved technology relating to battery packs, such as to provide cost-effective configurations which are reliable, robust and/or space efficient.

### SUMMARY

According to a first aspect of the disclosure, a battery pack is provided. The battery pack has a longitudinal extension along a longitudinal direction, a width extension along a width direction and a height extension along a height direction. The battery pack comprises:
- a plurality of prismatic battery cells, each prismatic battery cell comprising a top surface with at least one electrical terminal, a bottom surface, and four side surfaces connecting the top and bottom surfaces,
- a bottom support member having an extension along the longitudinal direction and an extension along the width direction such that it forms a support surface facing upwardly along the height direction,
- a cooling plate member having an extension along the longitudinal direction and an extension along the height direction, and being associated with the support surface of the bottom support member such that it forms a separation wall defining a first longitudinally extending space on one side thereof and a second longitudinally extending space on an opposite side thereof, as seen in the width direction,
- a plurality of transverse wall members, each transverse wall member having an extension in the width direction and an extension in the height direction, wherein at least one transverse wall member is mounted to the support surface of the bottom support member in the first longitudinally extending space and at least one transverse wall member is mounted to the support surface of the bottom support member in the second longitudinally extending space such that they form a respective first and second row of separate accommodation spaces along the longitudinal direction,
   wherein the plurality of prismatic battery cells are stacked in separate groups, each separate group comprising a set of prismatic battery cells stacked next to each other with the top surfaces facing upwardly in the height direction, and wherein each separate group is provided in a respective one of the separate accommodation spaces such that the bottom surface of each prismatic battery cell of the separate group is resting on the support surface of the bottom support member.

The first aspect of the disclosure may seek to provide an improved battery pack which at least partly alleviates one or more drawbacks of the prior art. A technical benefit may include that a compact configuration with high energy density is achieved with a favorable cooling of the prismatic battery cells. For example, by the battery pack configuration as disclosed herein, the cooling plate member which forms a separation wall can cool the prismatic battery cells on both sides thereof. This implies improved cooling in a cost-effective and space efficient manner. As another example, by the configuration of the battery pack as disclosed herein, a scalable configuration is achieved, in particular in the longitudinal direction, without the need of separate battery modules in the battery pack. Instead, a cell to pack configuration is provided, requiring fewer parts which may result in a less complex assembly procedure of the battery pack.

A prismatic battery cell as disclosed herein may be defined as a box-shaped, or brick-shaped battery cell, with a top surface, a bottom surface, and four side surfaces connecting the top and bottom surfaces. The side surfaces extend in the height direction between the bottom surface and the top surface. Neighboring surfaces are preferably perpendicular to each other.

Optionally in some examples, including in at least one preferred example, each separate group of the plurality of prismatic battery cells is provided in a respective one of the separate accommodation spaces such that a side surface of each prismatic battery cell of the separate group is in contact with the cooling plate member. A technical benefit may include improved cooling of the prismatic battery cells. Preferably, a thermal interface material (TIM) is provided in the contacting interface between the side surface and the cooling plate member.

Optionally in some examples, including in at least one preferred example, the at least one transverse wall member in the first longitudinally extending space and the at least one transverse wall member in the second longitudinally extending space are aligned along the width direction such that they form a gap therebetween for the cooling plate member. A technical benefit may include that the cooling plate member is well supported in the gap by the transverse wall members.

Optionally in some examples, including in at least one preferred example, the battery pack further comprises an end plate, at an end of the battery pack as seen in the longitudinal direction, which end plate is adapted such that it defines an end wall for an outermost accommodation space in the first row of separate accommodation spaces and an end wall for an outermost accommodation space in the second row of separate accommodation spaces. A technical benefit may include that the end plate defines an end for both outermost accommodation spaces at the end of the battery pack. This may result in that fewer parts are required. In some examples, each end of the battery pack as seen along the longitudinal direction comprises a respective end plate which is adapted such that it defines an end wall for an outermost accommodation space in the first row of separate accommodation spaces and an end wall for an outermost accommodation space in the second row of separate accommodation spaces.

Optionally in some examples, including in at least one preferred example, the end plate comprises at least one through-hole with an extension in the longitudinal direction which is adapted to receive a cooling inlet and/or outlet for coolant fluid. A technical benefit may include that a favorable, space-efficient configuration is achieved where the cooling inlet and/or outlet is provided at an end of the battery pack, as seen along the longitudinal direction. In some examples, the end plate comprises a first through-hole adapted to receive a cooling inlet and a second through-hole adapted to receive a cooling outlet, wherein the first and second through-holes are offset from each other in the height direction.

Optionally in some examples, including in at least one preferred example, the support surface, at an end of the battery pack as seen in the longitudinal direction, protrudes in the longitudinal direction beyond the first and second rows of separate accommodation spaces such that it forms an auxiliary support surface for at least one auxiliary component and/or an attachment arrangement for attaching the battery pack to another object. A technical benefit may include that a space-efficient configuration is achieved in which the prismatic battery cells are allowed to be packaged close to each other without any unnecessary intermediate spaces between the battery cells.

Optionally in some examples, including in at least one preferred example, the bottom support member, at the auxiliary support surface, comprises an opening extending therethrough in the height direction which is adapted to give access to an auxiliary component for a user. A technical benefit may include a favorable position of the opening for giving access to the auxiliary component. For example, it may be easier for a user to access an opening from below.

Optionally in some examples, including in at least one preferred example, the attachment arrangement comprises one or more fastening bores for receiving a respective fastener, such as a screw, rivet or bolt. A technical benefit may include that a more favorable attachment position is provided, at the ends of the battery packs, optionally without any further attachment positions between the ends of the battery pack, as seen along the longitudinal direction.

Optionally in some examples, including in at least one preferred example, the battery pack further comprises an end cover which covers at least a portion of the end of the battery pack. A technical benefit may include improved protection for the at least one auxiliary component. The end cover may be configured to cover the at least one auxiliary component and not cover any one of the prismatic battery cells.

Optionally in some examples, including in at least one preferred example, the battery pack further comprises at least one auxiliary component resting on the auxiliary support surface, wherein the end cover covers the at least one auxiliary component. A technical benefit may include a more favorable position for the at least one auxiliary component. For example, the at least one auxiliary component may be one or more of contactor(s), fuse(s), sensor(s), control unit(s), etc.

Optionally in some examples, including in at least one preferred example, the attachment arrangement is accessible from the outside of the battery pack when the end cover covers the at least one auxiliary component. A technical benefit may include that attachment/detachment of the battery pack can be done without removing the end cover, thereby protecting potentially sensitive parts inside the end cover.

Optionally in some examples, including in at least one preferred example, the end cover comprises one or more of a vent, an electrical connection, and an opening for a coolant pipe. A technical benefit may include that interfaces between an inside of the battery pack and an outside is provided on the end cover and preferably not at any other locations of the battery pack. This may result in a more robust configuration where such interfaces are not too close to the prismatic battery cells.

Optionally in some examples, including in at least one preferred example, the battery pack further comprises a main cover which covers the plurality of prismatic battery cells, wherein the main cover has a U-shaped cross-sectional profile, as seen in a sectional plane which is perpendicular to the longitudinal direction. A technical benefit may include that improved protection of the prismatic battery cells is enabled in a cost-effective and space-efficient manner.

Optionally in some examples, including in at least one preferred example, the main cover is attached to the bottom support member laterally outside each one of the first and second row of separate accommodation spaces. A technical benefit may include that a leak-free attachment interface is achieved between the main cover and the bottom support member in a cost-effective manner. For example, the main cover may be attached to the bottom support member by a weld. Additionally, or alternatively, other attachment techniques, such as using fasteners, are also conceivable.

Optionally in some examples, including in at least one preferred example, the cooling plate member comprises a cooling circuit for coolant fluid. A technical benefit may include improved cooling of the prismatic battery cells.

Optionally in some examples, including in at least one preferred example, the cooling plate member is a single piece unit. A technical benefit may include that a more cost-effective configuration is achieved, e.g., without using several cooling plate members in between the first and second longitudinally extending spaces.

Optionally in some examples, including in at least one preferred example, the battery pack further comprises at least one auxiliary cooling plate member laterally outside at least one of the first and second longitudinally extending spaces, as seen in the width direction. The at least one auxiliary cooling plate member preferably has an extension in the longitudinal direction and the height direction such that it forms a side wall adjacent the plurality of prismatic battery cells. A technical benefit may include improved cooling of the prismatic battery cells. The at least one auxiliary cooling plate member may comprise a cooling circuit for coolant fluid. In some examples, the battery pack further comprises a respective auxiliary cooling plate member laterally outside each one of the first and second longitudinally extending spaces, as seen in the width direction. A technical benefit may include that all lateral sides of the two rows of prismatic battery cells are cooled by three cooling plate members. This may imply improved cooling in a cost-effective manner.

According to a second aspect of the disclosure, a vehicle comprising a battery pack according to any one of the examples of the first aspect of the disclosure is provided. Advantages and technical benefits of the second aspect of the disclosure are analogous to the advantages and technical benefits of the first aspect of the disclosure.

According to a third aspect of the disclosure, a method for manufacturing a battery pack according to any one of the examples of the first aspect of the disclosure is provided. The method comprises:
- mounting the plurality of transverse wall members to the support surface of the bottom support member,
- providing the cooling plate member onto the support surface of the bottom support member, and
- providing each separate group of prismatic battery cells in a respective one of the separate accommodation spaces such that the bottom surface of each prismatic battery cell of the separate group is resting on the support surface of the bottom support member.

The third aspect of the disclosure may seek to provide an improved method for manufacturing a battery pack and for providing a battery pack configuration which at least partly alleviates one or more drawbacks of the prior art. A technical benefit may include that a compact configuration with high energy density is achieved in a cost-effective manner with a favorable cooling of the prismatic battery cells. Other advantages and technical benefits of the third aspect of the disclosure may be analogous to advantages and technical benefits of the first aspect of the disclosure.

Optionally in some examples, including in at least one preferred example, mounting the plurality of transverse wall members is performed prior to providing the cooling plate member onto the support surface. A technical benefit may include that the transverse wall members may be used for aligning the cooling plate member on the support surface, thereby facilitating positioning of the cooling plate member.

Optionally in some examples, including in at least one preferred example, the battery pack comprises a main cover as disclosed herein, and the method further comprises attaching the main cover to the bottom support member. For example, this may be done by welding or by fasteners as mentioned herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary battery pack in a pre-assembled state according to an example.
**FIG. 2b** is an exemplary prismatic battery cell in a perspective view according to an example.
**FIG. 2c** is an exemplary battery pack in a pre-assembled state according to an example.
**FIG. 2d** is an exemplary battery pack in a perspective view according to an example.
**FIG. 3** is an exemplary battery pack in a perspective view according to an example.
**FIG. 4a** is an exemplary battery pack in a side view according to an example.
**FIG. 4b** is an exemplary battery pack in a side view according to an example.
**FIG. 5** is an exemplary battery pack assembly according to an example.
**FIG. 6** is an exemplary flowchart of a method according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

The present disclosure may seek to provide an improved battery pack, such as a battery pack for an at least party electric vehicle, which is reliable, robust and space-efficient, and has a cost-effective configuration. For example, a compact configuration with high energy density may be achieved with a favorable cooling of the prismatic battery cells. By the battery pack configuration as disclosed herein, the cooling plate member which forms a separation wall may cool the prismatic battery cells on both sides thereof. This implies improved cooling in a cost-effective and space efficient manner. As another example, by the configuration of the battery pack as disclosed herein, a scalable configuration is achieved, in particular in the longitudinal direction, without the need of separate battery modules in the battery pack. Instead, a cell to pack configuration is provided, requiring fewer parts which may result in a less complex assembly procedure of the battery pack.

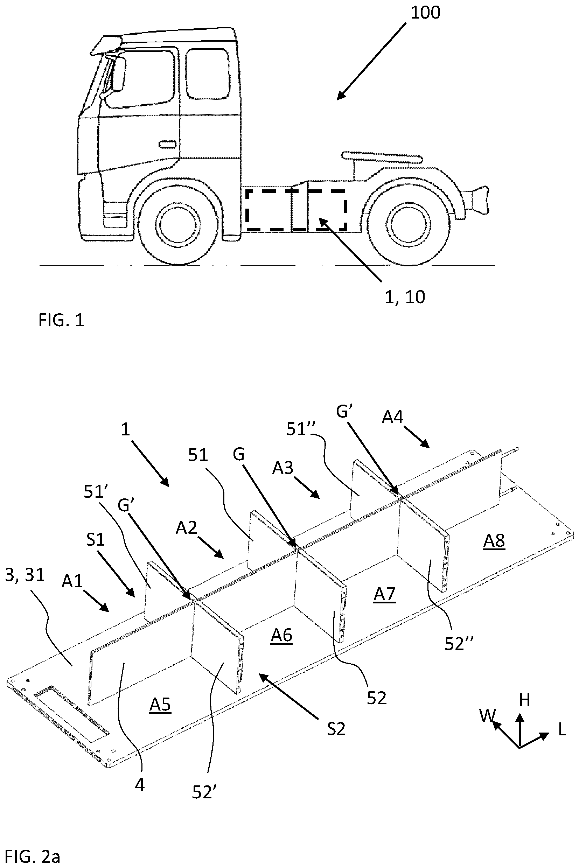

**FIG. 1** is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a battery pack 1 according to an example disclosed herein. The battery pack 1 may at least partly be used for driving one or more electric motors (not shown) of the vehicle 100. The vehicle 100 may accordingly be an electric vehicle or a hybrid vehicle, i.e., a vehicle which at least partly uses electric power for propulsion. The battery pack 1 as disclosed herein may also be used in a stationary unit, such as a building and/or any stationary machinery.

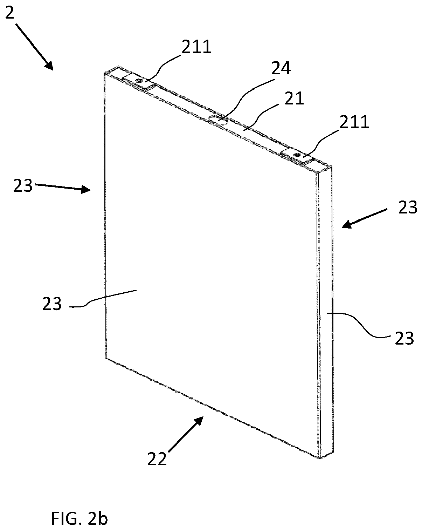

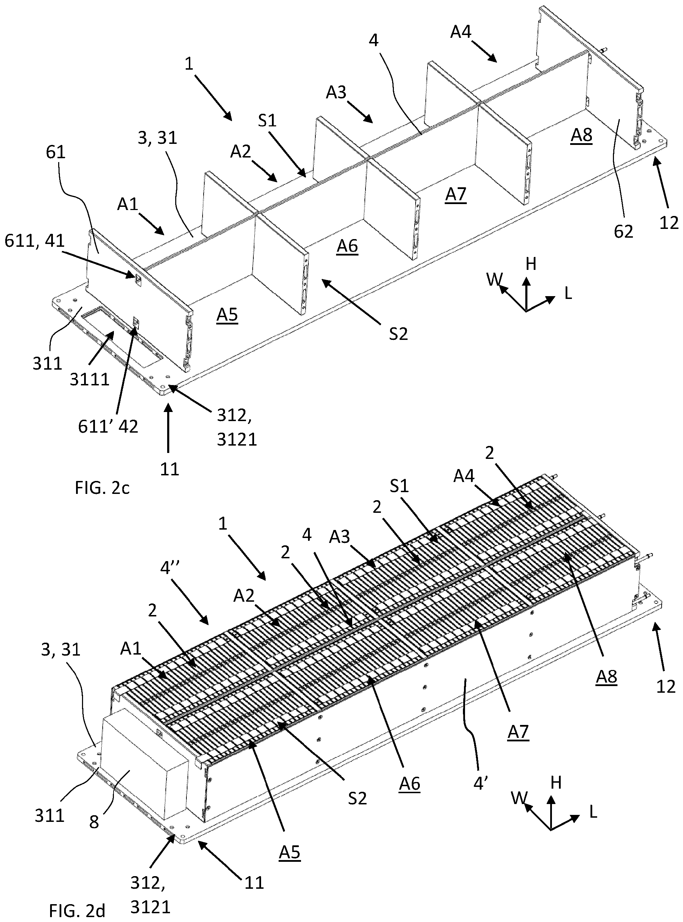

**FIG. 2a** depicts a perspective view of a battery pack 1 in a preassembled state according to an example. **FIG. 2b** depicts a perspective view of a prismatic battery cell 2 according to an example. **FIG. 2c** depicts a perspective view of a battery pack 1 in a preassembled state according to an example. **FIG. 2d** depicts a perspective view of a battery pack 1 according to an example comprising a plurality of prismatic battery cells 2 as shown in FIG. 2b.

With reference to e.g. FIGS. 2a-d, the battery pack 1 has a longitudinal extension along a longitudinal direction L, a width extension along a width direction W and a height extension along a height direction H. The directions L, W and H may correspond to a Cartesian coordinate system, i.e. the directions L, W and H are perpendicular to each other. In some examples, the height direction H may correspond to a vertical direction when the battery pack 1 is provided on a flat horizontally extending surface, such as when mounted in the vehicle 100.

The battery pack 1 comprises a plurality of prismatic battery cells 2. Each prismatic battery cell 2 comprises a top surface 21 with at least one electrical terminal 211, a bottom surface 22, and four side surfaces 23 connecting the top and bottom surfaces. In the example shown in FIG. 2b, the top surface 21 has two electrical terminals, i.e. an anode terminal and a cathode terminal, also known as a plus terminal and minus terminal.

The battery pack 1 further comprises a bottom support member 3 having an extension along the longitudinal direction L and an extension along the width direction W such that it forms a support surface 31 facing upwardly along the height direction H. For example, the bottom support member 3 may be made of a metallic material, a plastic material, a composite material, or any other material which is structurally rigid such that it can carry a load, e.g. the prismatic battery cells 2.

The battery pack 1 further comprises a cooling plate member 4 having an extension along the longitudinal direction L and an extension along the height direction H, and being associated with the support surface 31 of the bottom support member 3 such that it forms a separation wall defining a first longitudinally extending space S1 on one side thereof and a second longitudinally extending space S2 on an opposite side thereof, as seen in the width direction W.

The battery pack 1 further comprises a plurality of transverse wall members 51, 51', 51', 52, 52'. 52", each transverse wall member 51, 51', 51', 52, 52'. 52" having an extension in the width direction W and an extension in the height direction H. At least one transverse wall member 51, 51', 51" is mounted to the support surface 31 of the bottom support member 3 in the first longitudinally extending space S1 and at least one transverse wall member 52, 52', 52" is mounted to the support surface 31 of the bottom support member 3 in the second longitudinally extending space S2 such that they form a respective first and second row of separate accommodation spaces A1-A4, A5-A8 along the longitudinal direction L. In the shown example, there are three separate wall members in each longitudinally extending space, resulting in four accommodation spaces on each side of the cooling plate member 4. It shall be noted that fewer and also more accommodation spaces may be provided in other examples. As such, the configuration is well suited for scalability in the longitudinal direction L.

With reference to e.g. FIG. 2d, the plurality of prismatic battery cells 2 of the battery pack 1 are stacked in separate groups. Each separate group comprises a set of prismatic battery cells 2 stacked next to each other with the top surfaces 21 facing upwardly in the height direction H. In addition, each separate group is provided in a respective one of the separate accommodation spaces A1-A8 such that the bottom surface 22 of each prismatic battery cell 2 of the separate group is resting on the support surface 31 of the bottom support member 3. By way of example, the prismatic battery cells 2 may be attached to the support surface 31 by an adhesive, i.e. glue.

In the example shown in e.g. FIG. 2d, the battery pack l comprises two rows of separate accommodation spaces A1-A4 and A5-A8. It shall however be noted that the battery pack may also comprise more than two rows, i.e. the battery pack as disclosed herein may also be scalable in the width direction W.

As further may be gleaned from FIG. 2d, each separate group of the plurality of prismatic battery cells 2 is preferably provided in a respective one of the separate accommodation spaces A1-A8 such that a side surface 23 of each prismatic battery cell 2 of the separate group is in contact with the cooling plate member 4. Thereby, more efficient cooling of the prismatic battery cells 2 may be achieved. In this respect it shall be noted that e.g. TIM may be provided in the interface between the prismatic battery cells 2 and the cooling plate member 4. The side surface 23 which is in contact with the cooling plate member 4 is as shown preferably a lateral side surface of the prismatic battery cell 2 which is smaller than the side surfaces which faces away from the prismatic battery cell in opposite directions along the longitudinal direction L. In other words, each prismatic battery cell 2 in the battery pack 1 preferably has a maximum width in the width direction W which is larger than a maximum length of the prismatic battery cell 2 in the longitudinal direction L, such as at least 2, 3, 4, or 5 times larger. A maximum height of each prismatic battery cell 2 in the height direction H is preferably larger than the maximum length, such as at least 2, 3, 4, or 5 times larger.

As shown in e.g. FIG. 2a, the at least one transverse wall member 51 in the first longitudinally extending space S1 and the at least one transverse wall member 52 in the second longitudinally extending space S2 may be aligned along the width direction W such that they form a gap G therebetween for the cooling plate member 4. As further shown, each pair of transverse wall members 51, 52; 51', 52' and 51", 52" may be aligned in this manner such that they form a respective gap G, G', G" therebetween for the cooling plate member 4.

With reference to e.g. FIG. 2c, the battery pack 1 may further comprise an end plate 61, 62, at an end 11, 12 of the battery pack 1 as seen in the longitudinal direction L. In the shown example, there is one end plate 61, 62 at each end 11, 12. The end plate 61, 62 may be adapted such that it defines an end wall for an outermost accommodation space A1 in the first row of separate accommodation spaces A1-A4 and an end wall for an outermost accommodation space A5 in the second row of separate accommodation spaces A5-A8.

The end plate 61 may as shown comprise at least one through-hole 611, 611' with an extension in the longitudinal direction L which is adapted to receive a cooling inlet 41 and/or outlet 42 for coolant fluid. The cooling inlet 41 and/or outlet 42 is an inlet/outlet for the cooling plate member 4, which in this example comprises a cooling circuit (not shown) for coolant fluid. For example, as shown, the end plate 61 may comprise a first through-hole 611 adapted to receive a cooling inlet 41 and a second through-hole 611' adapted to receive a cooling outlet 42, wherein the first and second through-holes 611, 611' are offset from each other in the height direction H.

With reference to e.g. FIGS. 2c-d, the support surface 31, at an end 11 of the battery pack 1 as seen in the longitudinal direction L, may as shown protrude in the longitudinal direction L beyond the first and second rows of separate accommodation spaces A1-A4, A5-A8 such that it forms an auxiliary support surface 311 for at least one auxiliary component 8 and/or an attachment arrangement 312 for attaching the battery pack 1 to another object. The at least one auxiliary component 8 may be one or more of contactor(s), fuse(s), sensor(s), control unit(s), etc. In some examples, the at least one auxiliary component 8 is denoted a battery disconnect unit (BDU). A similar configuration may also be provided at the other end 12 of the battery pack 1, with or without any auxiliary component(s).

The bottom support member 3, at the auxiliary support surface 311, may as shown in FIG. 2c comprise an opening 3111 extending therethrough in the height direction H which is adapted to give access to the at least one auxiliary component 8 for a user. The opening 3111 may be closed by a hatch (not shown), thereby protecting the at least one auxiliary component 8 during use of the battery pack 1.

As shown in e.g. FIG. 2d, the attachment arrangement 312 may comprise one or more fastening bores 3121 for receiving a respective fastener, such as a screw, rivet or bolt (not shown). In the shown example, the fastening bores 3121 have an extension along the height direction H, allowing the battery pack 1 to be attached to an object provided below the battery pack 1.

As shown in FIG. 2d, the battery pack 1 may further comprise at least one auxiliary cooling plate member 4', 4" laterally outside at least one of the first and second longitudinally extending spaces S1, S2, as seen in the width direction W. The at least one auxiliary cooling plate member 4', 4" has an extension in the longitudinal direction L and the height direction H such that it forms a side wall adjacent the plurality of prismatic battery cells 2. The at least one auxiliary cooling plate member 4', 4" may comprise a cooling circuit for coolant fluid. As may be gleaned from FIG. 2d, the battery pack 1 may comprises a respective auxiliary cooling plate member 4', 4" laterally outside each one of the first and second longitudinally extending spaces S1, S2, as seen in the width direction W, thereby providing improved cooling for all of the prismatic battery cells 2 of the battery pack 1.

As shown in FIG. 2d, at least one of the cooling plate members 4, 4', 4" may be a single piece unit. For example, the respective auxiliary cooling plate member 4', 4" may be attached by fasteners to the adjacent transverse wall members 51, 51', 51", 52, 52', 52" and/or the end plates 61, 62.

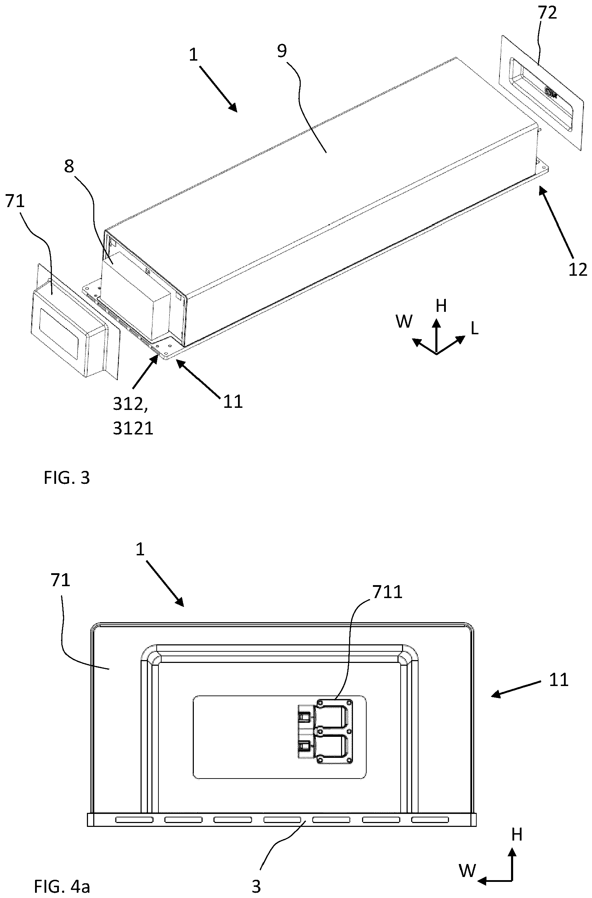

**FIG. 3** depicts an example of a battery pack 1 in perspective view according to an example. The battery pack 1 may for example be the battery pack 1 as shown in the previous figures. With reference to FIG. 3, the battery pack 1 may as shown comprise an end cover 71, 72 which covers at least a portion of the end 11, 12 of the battery pack 1. In the shown example, there are two covers 71, 72, one for each end 11, 12. The end cover 71 may as further shown preferably be configured to cover the at least one auxiliary component 8 which is resting on the auxiliary support surface 311.

As may further be gleaned from e.g. FIG. 3, the attachment arrangement 312 may be accessible from the outside of the battery pack 1 when the end cover 71 covers the at least one auxiliary component 8. A similar configuration may also be used for the other end cover 72.

FIG. 3 also depicts that the battery pack 1 may further comprise a main cover 9 which covers the plurality of prismatic battery cells 1. The main cover 9 has a U-shaped cross-sectional profile, as seen in a sectional plane which is perpendicular to the longitudinal direction L. In the shown example, the main cover 9 is attached to the bottom support member 3 laterally outside each one of the first and second row of separate accommodation spaces A1-A4, A5-A8. This may for example be achieved by welding along the longitudinal direction L of the battery pack 1 such that a leak-free attachment interface is achieved.

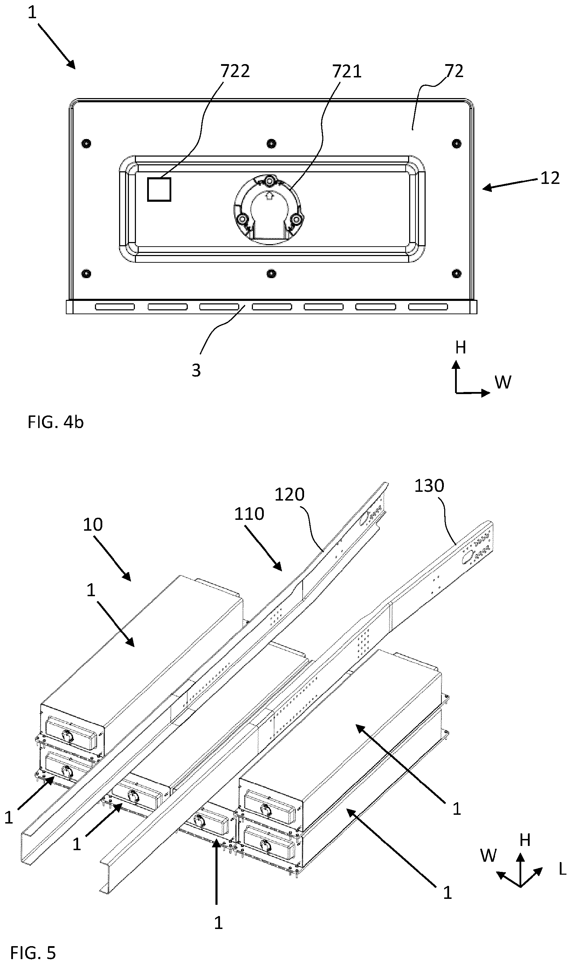

**FIG. 4a** and **FIG. 4b** depict side views of a battery pack 1 according to an example. The side views show examples of the ends 11, 12 of the battery pack 1. For example, the battery packs 1 shown in FIGS. 4a-b may be examples of the battery pack 1 shown in e.g. FIGS. 2a-d and FIG. 3.

The end cover 71 may as shown in FIG. 4a comprise an electrical connection 711. In this example, the electrical connection is electrically connected to the at least one auxiliary component 8, which in turn is electrically connected to the prismatic battery cells 2.

The end cover 72 may as shown in FIG. 4b comprise a vent 721 which may be in fluid communication with vent openings 24 (see FIG. 2b) of the prismatic battery cells 2.

The end cover 72 may as shown schematically in FIG. 4b comprise an opening 722 for a coolant pipe (not shown). The coolant pipe is preferably fluidly connected to at least one of the cooling plate members 4, 4', 4".

FIG. 5 depicts a perspective view of a battery pack assembly 10 according to an example. In this example, the battery pack assembly 10 is mounted to a vehicle chassis 110 comprising a first frame rail member 120 and a second frame rail member 130 which both have a main extension along the longitudinal direction L, which corresponds to a longitudinal direction of the vehicle chassis 110. The vehicle chassis 110 may be part of the vehicle 100 shown in FIG. 1. The longitudinal direction L of the vehicle chassis 110 corresponds to a travel direction of the vehicle 100.

The battery assembly 10 comprises a plurality of battery packs 1 which are provided adjacent each other, and preferably attached to each other. The battery packs 1 may be configured according to any one of the examples disclosed herein, such as shown in FIGS. 2a-d and/or FIG. 3. The longitudinal directions L of the battery packs 1 are parallel to the longitudinal direction L of the vehicle chassis 110.

In the shown example, there are six battery packs 1. However, the battery pack assembly 10 may comprise more or fewer battery packs 1. The battery packs 1 may as shown be provided in an U-shaped configuration, as shown in a sectional plane which is perpendicular to the longitudinal direction L. Accordingly, the battery pack assembly 10 may extend in the width direction W below the first frame rail member 120 and the second frame rail member 130, and upwardly in the height direction H on each respective lateral side of the first frame rail member 120 and the second frame rail member 130. Other configurations are also conceivable, such as an L-shaped configuration where the battery assembly only extends upwardly in the height direction H on one lateral side of the first frame rail member 120 and the second frame rail member 130.

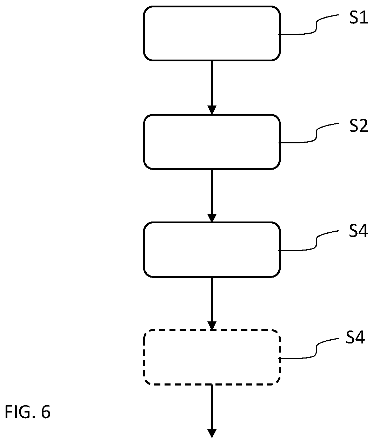

**FIG. 6** is an exemplary flowchart of a method for manufacturing a battery pack 1 according to any one of the examples disclosed herein. The flowchart depicts actions of the method. It shall be noted that the order of the actions may be altered unless explicitly expressed otherwise. The box with dashed lines in FIG. 6 indicates that it is an optional action. The method for manufacturing the battery pack may optionally be denoted as a method for assembling a battery pack, e.g. it may be denoted as an assembly procedure.

The method comprises:
S 1: mounting the plurality of transverse wall members 51, 51', 51", 52, 52', 52" to the support surface 31 of the bottom support member 3. For example, this may be done by welding.

The method further comprises:
S2: providing the cooling plate member 4 onto the support surface 31 of the bottom support member 3. This may be done by attaching the cooling plate member 4 to the support surface 31, and/or by providing the cooling plate member 4 in the above-mentioned gaps G, G', G". The auxiliary cooling plate member(s) 4', 4" may also be provided onto the support surface 31, e.g. by also attaching the auxiliary cooling plate member(s) 4', 4" to the adjacent transverse wall members 51, 51', 51", 52, 52', 52" and/or the end plates 61, 62.

The method further comprises:
S3: providing each separate group of prismatic battery cells 2 in a respective one of the separate accommodation spaces A1-A8 such that the bottom surface 22 of each prismatic battery cell 2 of the separate group is resting on the support surface 31 of the bottom support member 3. For example, an adhesive, i.e. glue, may be provided between the prismatic battery cells 2 and the support surface 31.

Mounting the plurality of transverse wall members may be performed prior to providing the cooling plate member 4 onto the support surface 31. Thereby, gap(s) G, G', G" may be provided for the cooling plate member 4 prior to providing the cooling plate member 4. As such, positioning of the cooling plate member 4 on the support surface 31 may be facilitated.

As mentioned in the above, the battery pack 1 may comprise a main cover 9 and/or one or two end covers 71, 72.

As such, the method may further comprise:
S4: attaching the main cover 9 to the bottom support member 3, and/or the at least one end cover 71, 72 to the battery pack 1.

In the following, features and possible feature combinations of the present disclosure are presented as a list of Examples.

Example 1: A battery pack (1) having a longitudinal extension along a longitudinal direction (L), a width extension along a width direction (W) and a height extension along a height direction (H), the battery pack (1) comprising:
- a plurality of prismatic battery cells (2), each prismatic battery cell (2) comprising a top surface (21) with at least one electrical terminal (211), a bottom surface (22), and four side surfaces (23) connecting the top and bottom surfaces,
- a bottom support member (3) having an extension along the longitudinal direction (L) and an extension along the width direction (W) such that it forms a support surface (31) facing upwardly along the height direction (H),
- a cooling plate member (4) having an extension along the longitudinal direction (L) and an extension along the height direction (H), and being associated with the support surface (31) of the bottom support member (3) such that it forms a separation wall defining a first longitudinally extending space (S1) on one side thereof and a second longitudinally extending space (S2) on an opposite side thereof, as seen in the width direction (W),
- a plurality of transverse wall members (51, 52), each transverse wall member (51, 52) having an extension in the width direction (W) and an extension in the height direction (H), wherein at least one transverse wall member (51) is mounted to the support surface (31) of the bottom support member (3) in the first longitudinally extending space (S1) and at least one transverse wall member (52) is mounted to the support surface (31) of the bottom support member (3) in the second longitudinally extending space (S2) such that they form a respective first and second row of separate accommodation spaces (A1-A4, A5-A8) along the longitudinal direction (L),
   wherein the plurality of prismatic battery cells (2) are stacked in separate groups, each separate group comprising a set of prismatic battery cells stacked next to each other with the top surfaces (21) facing upwardly in the height direction (H), and wherein each separate group is provided in a respective one of the separate accommodation spaces (A1-A8) such that the bottom surface (22) of each prismatic battery cell of the separate group is resting on the support surface (31) of the bottom support member (3).

Example 2: The battery pack (1) according to Example 1, wherein each separate group of the plurality of prismatic battery cells (2) is provided in a respective one of the separate accommodation spaces (A1-A8) such that a side surface (23) of each prismatic battery cell of the separate group is in contact with the cooling plate member (4).

Example 3: The battery pack (1) according to any one of the preceding Examples, wherein the at least one transverse wall member (51) in the first longitudinally extending space (S1) and the at least one transverse wall member (52) in the second longitudinally extending space (S2) are aligned along the width direction (W) such that they form a gap (G) therebetween for the cooling plate member (4).

Example 4: The battery pack (1) according to any one of the preceding Examples, further comprising an end plate (61, 62), at an end (11, 12) of the battery pack (1) as seen in the longitudinal direction (L), which end plate (61, 62) is adapted such that it defines an end wall for an outermost accommodation space in the first row of separate accommodation spaces (A1-A4) and an end wall for an outermost accommodation space in the second row of separate accommodation spaces (A5-A8).

Example 5: The battery pack (1) according to Example 4, wherein the end plate (61) comprises at least one through-hole (611) with an extension in the longitudinal direction (L) which is adapted to receive a cooling inlet and/or outlet for coolant fluid.

Example 6: The battery pack (1) according to any one of the preceding Examples, wherein the support surface (31), at an end (11) of the battery pack (1) as seen in the longitudinal direction (L), protrudes in the longitudinal direction (L) beyond the first and second rows of separate accommodation spaces (A1-A4, A5-A8) such that it forms an auxiliary support surface (311) for at least one auxiliary component (8) and/or an attachment arrangement (312) for attaching the battery pack (1) to another object.

Example 7: The battery pack (1) according to Example 6, wherein the bottom support member (3), at the auxiliary support surface (311), comprises an opening (3111) extending therethrough in the height direction (H) which is adapted to give access to an auxiliary component (8) for a user.

Example 8: The battery pack (1) according to Example 6 or 7, wherein the attachment arrangement (312) comprises one or more fastening bores (3121) for receiving a respective fastener, such as a screw, rivet or bolt.

Example 9: The battery pack (1) according to any one of Examples 6-8, further comprising an end cover (71, 72) which covers at least a portion of the end (11, 12) of the battery pack (1).

Example 10: The battery pack (1) according to Example 9, further comprising at least one auxiliary component (8) resting on the auxiliary support surface (311), wherein the end cover (71) covers the at least one auxiliary component (8).

Example 11: The battery pack (1) according to Example 10, wherein the attachment arrangement (312) is accessible from the outside of the battery pack (1) when the end cover (71) covers the at least one auxiliary component (8).

Example 12: The battery pack (1) according to any one of Examples 9-11, wherein the end cover (71, 72) comprises one or more of a vent (721), an electrical connection (711), and an opening (722) for a coolant pipe.

Example 13: The battery pack (1) according to any one of the preceding Examples, further comprising a main cover (9) which covers the plurality of prismatic battery cells (1), wherein the main cover (9) has a U-shaped cross-sectional profile, as seen in a sectional plane which is perpendicular to the longitudinal direction (L).

Example 14: The battery pack (1) according to Example 13, wherein the main cover (9) is attached to the bottom support member (3) laterally outside each one of the first and second row of separate accommodation spaces (A1-A4, A5-A8).

Example 15: The battery pack (1) according to any one of the preceding Examples, wherein the cooling plate member (4) comprises a cooling circuit for coolant fluid.

Example 16: The battery pack (1) according to any one of the preceding Examples, wherein the cooling plate member (4) is a single piece unit.

Example 17: A vehicle (100) comprising a battery pack (1) according to any one of the preceding Examples.

Example 18: A method for manufacturing a battery pack (1) according to any one of Examples 1-16, comprising:
- mounting (S1) the plurality of transverse wall members (51, 52) to the support surface (31) of the bottom support member (3),
- providing (S2) the cooling plate member (4) onto the support surface (31) of the bottom support member (3), and
- providing (S3) each separate group of prismatic battery cells (2) in a respective one of the separate accommodation spaces (A1-A8) such that the bottom surface (22) of each prismatic battery cell of the separate group is resting on the support surface (31) of the bottom support member (3).

Example 19: The method according to Example 18, wherein mounting the plurality of transverse wall members (51, 52) is performed prior to providing the cooling plate member (4) onto the support surface (31).

Example 20: The method according to any one of Examples 18-19, wherein the battery pack (1) comprises a main cover (9) according to Example 14, the method further comprising attaching (S4) the main cover (9) to the bottom support member (3).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1) having a longitudinal extension along a longitudinal direction (L), a width extension along a width direction (W) and a height extension along a height direction (H), the battery pack (1) comprising:
- a plurality of prismatic battery cells (2), each prismatic battery cell (2) comprising a top surface (21) with at least one electrical terminal (211), a bottom surface (22), and four side surfaces (23) connecting the top and bottom surfaces,
- a bottom support member (3) having an extension along the longitudinal direction (L) and an extension along the width direction (W) such that it forms a support surface (31) facing upwardly along the height direction (H),
- a cooling plate member (4) having an extension along the longitudinal direction (L) and an extension along the height direction (H), and being associated with the support surface (31) of the bottom support member (3) such that it forms a separation wall defining a first longitudinally extending space (S1) on one side thereof and a second longitudinally extending space (S2) on an opposite side thereof, as seen in the width direction (W),
- a plurality of transverse wall members (51, 52), each transverse wall member (51, 52) having an extension in the width direction (W) and an extension in the height direction (H), wherein at least one transverse wall member (51) is mounted to the support surface (31) of the bottom support member (3) in the first longitudinally extending space (S1) and at least one transverse wall member (52) is mounted to the support surface (31) of the bottom support member (3) in the second longitudinally extending space (S2) such that they form a respective first and second row of separate accommodation spaces (A1-A4, A5-A8) along the longitudinal direction (L),
wherein the plurality of prismatic battery cells (2) are stacked in separate groups, each separate group comprising a set of prismatic battery cells stacked next to each other with the top surfaces (21) facing upwardly in the height direction (H), and wherein each separate group is provided in a respective one of the separate accommodation spaces (A1-A8) such that the bottom surface (22) of each prismatic battery cell of the separate group is resting on the support surface (31) of the bottom support member (3).

2. The battery pack (1) according to claim 1, wherein each separate group of the plurality of prismatic battery cells (2) is provided in a respective one of the separate accommodation spaces (A1-A8) such that a side surface (23) of each prismatic battery cell of the separate group is in contact with the cooling plate member (4).

3. The battery pack (1) according to any one of the preceding claims, wherein the at least one transverse wall member (51) in the first longitudinally extending space (S1) and the at least one transverse wall member (52) in the second longitudinally extending space (S2) are aligned along the width direction (W) such that they form a gap (G) therebetween for the cooling plate member (4).

4. The battery pack (1) according to any one of the preceding claims, further comprising an end plate (61, 62), at an end (11, 12) of the battery pack (1) as seen in the longitudinal direction (L), which end plate (61, 62) is adapted such that it defines an end wall for an outermost accommodation space in the first row of separate accommodation spaces (A1-A4) and an end wall for an outermost accommodation space in the second row of separate accommodation spaces (A5-A8).

5. The battery pack (1) according to claim 4, wherein the end plate (61) comprises at least one through-hole (611) with an extension in the longitudinal direction (L) which is adapted to receive a cooling inlet and/or outlet for coolant fluid.

6. The battery pack (1) according to any one of the preceding claims, wherein the support surface (31), at an end (11) of the battery pack (1) as seen in the longitudinal direction (L), protrudes in the longitudinal direction (L) beyond the first and second rows of separate accommodation spaces (A1-A4, A5-A8) such that it forms an auxiliary support surface (311) for at least one auxiliary component (8) and/or an attachment arrangement (312) for attaching the battery pack (1) to another object.

7. The battery pack (1) according to claim 6, wherein the bottom support member (3), at the auxiliary support surface (311), comprises an opening (3111) extending therethrough in the height direction (H) which is adapted to give access to an auxiliary component (8) for a user.

8. The battery pack (1) according to claim 6 or 7, wherein the attachment arrangement (312) comprises one or more fastening bores (3121) for receiving a respective fastener, such as a screw, rivet or bolt.

9. The battery pack (1) according to any one of claims 6-8, further comprising an end cover (71, 72) which covers at least a portion of the end (11, 12) of the battery pack (1).

10. The battery pack (1) according to claim 9, further comprising at least one auxiliary component (8) resting on the auxiliary support surface (311), wherein the end cover (71) covers the at least one auxiliary component (8).

11. The battery pack (1) according to claim 10, wherein the attachment arrangement (312) is accessible from the outside of the battery pack (1) when the end cover (71) covers the at least one auxiliary component (8).

12. The battery pack (1) according to any one of the preceding claims, further comprising a main cover (9) which covers the plurality of prismatic battery cells (1), wherein the main cover (9) has a U-shaped cross-sectional profile, as seen in a sectional plane which is perpendicular to the longitudinal direction (L).

13. The battery pack (1) according to claim 12, wherein the main cover (9) is attached to the bottom support member (3) laterally outside each one of the first and second row of separate accommodation spaces (A1-A4, A5-A8).

14. The battery pack (1) according to any one of the preceding claims, wherein the cooling plate member (4) comprises a cooling circuit for coolant fluid.

15. A vehicle (100) comprising a battery pack (1) according to any one of the preceding claims.
